# EUROPÄISCHE PATENTSCHRIFT

(11) **EP 0 967 570 B1**
(45) Veröffentlichungstag und Bekanntmachung des Hinweises auf die Patenterteilung: **06.09.2006**
(21) Anmeldenummer: 99112112.0
(22) Anmeldetag: 23.06.1999
(51) Int. Cl.: G06K 19/077

(54) **Verfahren zur Herstellung von Transponderchips**
Fabrication method for transponder chips
Méthode pour la fabrication de transpondeurs à puce

(30) Priorität: 25.06.1998 DE 19828403; 25.09.1998 DE 19844089
(43) Veröffentlichungstag der Anmeldung: 29.12.1999
(73) Patentinhaber: PAV Card GmbH, 22952 Lütjensee (DE)
(72) Erfinder: Früchtenicht, Dierk, Dipl.-Ing. (FH), 22929 Schönberg (DE)
(74) Vertreter: Kruspig, Volkmar

(56) Entgegenhaltungen:
- WO-A-96/07984

## Beschreibung

Die Erfindung betrifft ein Verfahren zur Herstellung einer kontaktlosen Chipkarte, diese enthaltend einen Transponderchip, wobei der Chip nach Vereinzeln aus dem Waferverband in einen Laminat-, insbesondere Kartenkörper einer kontaktlosen Chipkarte eingebracht und mit einer induktiven Signalübertragungseinrichtung in Form einer Antennenspule elektrisch kontaktiert wird.

Es ist bekannt, bei der Herstellung einer Chipkarte, insbesondere solcher, bei der sowohl Mittel zur kontaktlosen Datenübertragung als auch eine galvanische Kontaktebene vorhanden ist, in einen Kartenkörper ein Modul einzubringen, welches einen Halbleiter- oder Transponderchip umfaßt.

Das Modul mit Halbleiterchip wird vorzugsweise in eine Ausnehmung im Kartenkörper eingelegt und mittels Fügen oder dergleichen mit dem Kartenkörper unter Erhalt einer entsprechenden mechanischen und elektrischen Verbindung laminiert.

Beispielsweise kann eine elektrische Verbindung zwischen Modul und Kartenkörper bzw. auf dem Kartenkörper befindlichen Kontakten, die mit einer Spule zur Herstellung einer kontaktlosen Verbindung zur Umgebung in Kontakt stehen, dadurch zustande kommen, daß ein anisotroper leitender Klebstoff im Bereich der Anschlußstellen und/oder der Verbindungsstellen des jeweiligen Mittels für eine kontaktlose Datenübertragung aufgetragen und der Klebstoff zumindest im Bereich der Anschlußstellen so weit verdichtet oder komprimiert wird, daß eine elektrisch leitende Brücke entsteht.

Die bei der Herstellung von Chipkarten verwendeten Module greifen in der Regel auf einen Kunststoffträger zurück, auf dem der eingangs erwähnte Halbleiterchip ggfs. mit sogenannten Kontaktflächen versehen angeordnet ist. Das so vorgefertigte ISO-Modul wird mit dem Kartenträger, der z.B. aus Polycarbonat bestehen kann, verbunden. Dieses Verbinden bzw. das Einsetzen des Moduls in den Kartenkörper in eine, z.B. gefräste Ausnehmung erfolgt üblicherweise unter Rückgriff auf die genannten Klebeverfahren bei Verwendung eines Heiß- oder Schmelzklebers.

In dem Falle, wenn Kombikarten oder reine kontaktlose Karten hergestellt werden sollen, muß eine weitere Kontaktebene mit Anschlußstellen für die Induktionsschleife, d.h. für die induktive Signalübertragungseinrichtung, vorgesehen sein.

Diese Anschlußstellen befinden sich beim bekannten Stand der Technik bevorzugt erhaben auf der Oberfläche des Moduls und/oder auf der Oberfläche oder an den Seitenflächen der Ausnehmung innerhalb des Kartenträgers. Bei derartigen Anordnungen ist es dann möglich, die Verklebung von Modul- und Kartenträger mittels der Herstellung der elektrisch leitenden Verbindung in einem einzigen Arbeitsgang durchzuführen. Es hat sich jedoch gezeigt, daß das erforderliche Temperatur- und Zeitregime zur Herstellung zuverlässiger sowohl elektrischer als auch mechanischer Verbindungen engen Toleranzen unterliegt, so daß bei nicht optimalen Verfahrensparametern die Langzeitstabilität derartig hergestellter Karten reduziert ist und daß es aufgrund der Abmessungen und der plastischen Eigenschaften des Moduls sowie des Kartenträgers zu Verwindungen und Verspannungen in der Karte mit der Folge gestörter elektrischer Verbindungen kommt. Zum Stand der Technik sei beispielsweise auf die DE 196 32 113 C1 oder die DE 196 07 212 C1 verwiesen.

Darüber hinaus besteht bei eben verlegten Anschlußenden der Signalübertragungseinrichtung das Problem, daß das Ausbilden der Kavität äußerst exakt erfolgen muß, um sicherzustellen, daß einerseits die Kontaktflächen freigelegt werden, andererseits aber ein zu starker Materialabtrag vermieden wird.

Aus der WO 98/22906 ist ein Verfahren zum Herstellen einer Chipkarte bekannt, wobei ein auf einem Modul befindlicher Halbleiterchip in eine Ausnehmung eines Kartenträgers eingesetzt und mit einer induktiven Signalübertragungseinrichtung in Form einer Antennenspule kontaktiert wird.

Gemäß dortiger Lösung wird die Antennenspule oder werden die Antennenspulen-Anschlußenden mindestens im Bereich von elektrischen Anschlußflächen des Moduls oder des Halbleiterchips innerhalb der Ausnehmung zur Aufnahme von Biege- und/oder Torsionskräften mäander- oder spiralförmig ausgebildet. Vorzugsweise haben die Antennenspulen-Anschlußenden eine gewundene Biegefederform.

Bei dieser Lösung wird davon ausgegangen, daß die Antennenspulen einschließlich der Biegefeder-Anschlußenden sich bereits im Kartenkörper befinden und im Nachgang die Kavität zur Aufnahme des Moduls ausgebildet werden muß. In dem Falle, wenn ein Kartenkörper das Chipmodul bereits aufnimmt und auf oder in der Oberfläche des Kartenkörpers eine Antennenspule zu verlegen ist, sollte jedoch zweckmäßigerweise eine unmittelbare Kontaktierung der Anschlußenden mit den zur Oberfläche reichenden Kontaktflächen des Chipmoduls möglich sein. Übliche Kontaktflächen vereinzelter Chips besitzen jedoch Abmessungen, welche klein bezogen den Durchmesser oder die laterale Ausdehnung des Antennenspulen-Anschlußdrahts sind. Hierdurch ergeben sich technologisch gesehen Probleme bei der Führung der Anschlußenden hin zum Kontaktbereich. Kleine Kontaktflächen weisen darüber hinaus Nachteile bezüglich der Langzeitstabilität der Gesamtanordnung auf, insbesondere dann, wenn wie dargelegt im Betrieb oder bei Benutzung eines Laminat- oder Kartenkörpers Biege- oder Torsionskräften auftreten.

Aus der WO 96/07984 ist ein Verfahren zur Herstellung eines Chipkartenmoduls für kontaktlose Chipkarten vorbekannt, wobei dort auf einem Trägerkörper eine Antennenspule angeordnet ist, deren Anschlüsse mit einem ebenfalls auf dem Trägerkörper angeordneten Halbleiterchip durch Bondkontakte verbunden sind.

Nach der dortigen Lehre werden die Spulenanschlüsse direkt auf Kontaktfelder des Halbleiterchips gebondet. Der Bonder ist dabei direkt in den Drahtführungskopf des Spulenwicklerautomaten integriert, so dass alle Montageschritte mit einer Maschine durchgeführt werden können.

Es ist daher Aufgabe der Erfindung, ein weiterentwickeltes Verfahren zur Herstellung einer Kontaktlosen Chipkarte, diese enthaltend einen Transponderchip anzugeben, wobei dieser nach dem Vereinzeln aus dem Waferverband in ein Laminat-, insbesondere Kartenkörper einer kontaktlosen Chipkarte eingebracht und mit einer induktiven Signalübertragungseinrichtung in Form einer Antennenspule elektrisch kontaktiert wird, wobei die Kontaktsicherheit und die Langzeitstabilität der ausgebildeten elektrischen Verbindungen zwischen Antennenspule und Chip erhöht werden soll.

Die Lösung der Aufgabe der Erfindung erfolgt mit einem Verfahren in seiner Definition gemäß Patentanspruch 1, wobei die Unteransprüche zweckmäßige Ausgestaltungen und Weiterbildungen umfassen.

Demgemäß wird verfahrensseitig von einer Vergrößerung der wirksamen Antennenspulen-Kontaktflächen bis hin zur maximalen Fläche, die der Oberfläche des vereinzelten Chips geteilt durch die Anzahl der erforderlichen Kontakte sowie unter Berücksichtigung eines isolierenden Abschnitts entspricht, ausgegangen.

Hierfür werden mindestens zwei Kontaktflächen der Chips zum Anschluß der induktiven Signalübertragungseinrichtung im Waferverband mit einer hochleitfähigen metallischen Beschichtung, vorzugsweise einer Au-Beschichtung versehen. Unter Freilassen der derart beschichteten Kontaktfläche wird dann großflächig eine isolierende Passivierungsschicht aufgebracht. Nach dem Aushärten der Passivierungsschicht wird mittels Siebdruck eine leitfähige Polymerschicht in den Grenzen des später zu vereinzelnden Chips großflächig aufgetragen. Die so erhaltenen leitfähigen Polymerschichtflächen sind elektrisch voneinander isoliert, stehen aber mit der metallischen Beschichtung auf der Kontaktfläche der Chips in elektrischer Verbindung, so daß sich hierdurch die gewünschte laterale Kontaktflächenvergrößerung ergibt.

Nach an sich bekanntem Vereinzeln der so vorbehandelten Chips werden diese in eine Ausnehmung des Laminat- oder Kartenkörpers eingebracht und Anschlußenden der elektrischen Signalübertragungseinrichtung werden erfindungsgemäß mit den Polymerschicht-Kontaktflächen durch mindestens teilweises Einbetten in diese elektrisch und mechanisch verbunden.

In einer Ausgestaltung besteht die Möglichkeit, auf den abgedünnten Wafer vor dem Vereinzeln eine Rückseitenversteifung, z.B. aus Invar aufzubringen, um das Handling im technologischen Prozeß zu verbessern sowie um Beschädigungen der Chips zu vermeiden.

Beim Aufbringen der Passivierungsschicht sowie der leitfähigen Polymerbeschichtung muß dafür Sorge getragen werden, daß neben den Chipkontaktflächen auch Bereiche mit technologischen Kennzeichnungen, z.B. in Form von Positioniermarken, beschichtungsfrei bleiben.

Die Anschlußenden einer Antennenspule, welche als induktive Signalübertragungseinrichtung vorzugsweise dient, erstrecken sich über die laterale Flächenausdehnung der vergrößerten Kontaktflächen und werden dementsprechend beim Verlegen der Spule zum Erhalt einer optimierten mechanischen und elektrischen Verbindung geführt. Vorzugsweise mittels Thermosonic wird während des Verlegevorgangs die elektrische Verbindung mit der jeweiligen Kontaktfläche hergestellt, wobei für das Einbringen von Energie, die für das Einbetten der Anschlußenden in die Polymerschicht notwendig ist, auch auf Ultraschall, Thermokompression, Hochfrequenzenergie oder Laserstrahlung zurückgegriffen werden kann.

Weiterhin besteht gemäß einer Ausführungsform die Möglichkeit, nach Kontaktierung der induktiven Signalübertragungseinrichtung bzw. Antennenspule eine Oberflächenschutzschicht aufzubringen, wobei diese eine übliche Laminatschicht des Kartenkörpers sein kann. Alternativ oder ergänzend kann der Kontaktflächenbereich, welcher im wesentlichen der Chipoberfläche entspricht, mit einer Beschichtung aus einem UV-härtenden Epoxidharz versehen werden.

Mittels des vorgestellten erfindungsgemäßen Verfahrens wird in besonders vorteilhafter Weise die elektrische Kontaktierung durch Einbetten der Drahtenden einer Antennenspule in eine vorbereitete leitfähige Polymerschicht vorgenommen, wobei die Oberflächen des umgebenden Kartenkörpers und des Chips mit den vergrößerten Kontaktflächen nahezu in einer Ebene liegen. Auf bisher notwendige Lead Frames oder spezielle Module mit elektrischen Kontaktflächen, die wiederum zu den Chipkontakten eine Drahtbondverbindung aufweisen, kann verzichtet werden.

Das vorgestellte Verfahren eignet sich insbesondere für Transponderchip-Applikationen auf Laminatbasis, da hier der elektrisch Kontakt durch einfaches Verlegen der Antennenspule ohne zusätzliche Prozeßschritte realisiert werden kann.
Dadurch, daß auf Zwischenträger oder spezielle Module mit verstärkten äußeren Kontakten verzichtet werden kann, sind besonders kleine Bauformen, insbesondere Karten geringer Dicke kostengünstig herstellbar.

Die Erfindung soll nachstehend anhand eines Ausführungsbeispiels sowie unter Zuhilfenahme von Figuren näher erläutert werden.

Hierbei zeigen:
- Fig. 1: eine Explosivdarstellung der Schichtenfolge eines Transponderchips;
- Fig. 2: eine Draufsicht auf eine Karteninnenlage mit Transponderchip und Antenne;
- Fig. 3: eine vergrößerte Darstellung der Oberfläche des Chips mit Antennenspulen-Anschlußenden;
- Fig. 4: eine prinzipielle Darstellung der Technologie des Aufbringens einer Antennenspule auf oder in die Oberfläche des Kartenkörpers mit Kontaktierung der AntennenspulenAnschlußenden und
- Fig. 5: ein Ablaufplan des Verfahrens zum Herstellen einer kontaktlosen Chipkarte.

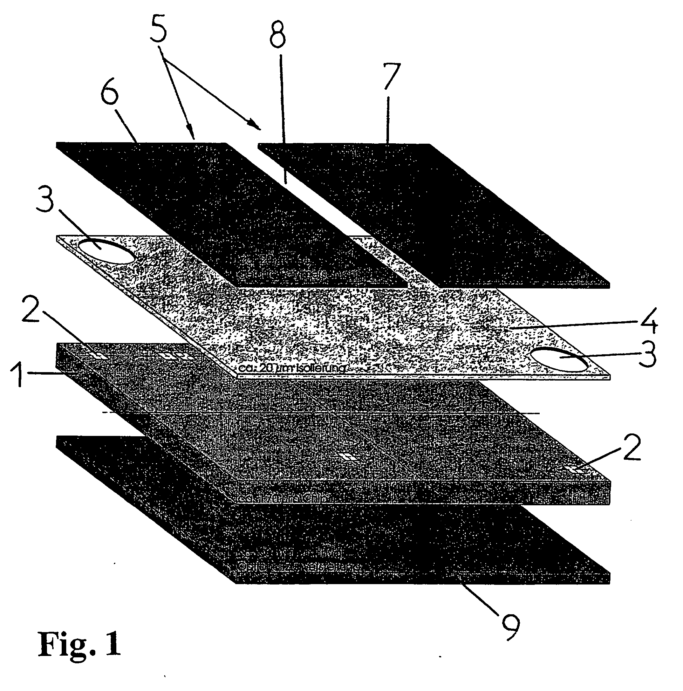

Wie aus der Fig. 1 ersichtlich, besitzt der hier gezeigte Chip 1 Kontaktflächen 2, wovon die äußeren zum elektrischen Anschluß eine Antennenspule, die sich an oder in einem Kartenkörper befindet, genutzt werden.

Auf die Oberfläche des Chips 1 wird eine ca. 20 µm starke isolierende Passivierungsschicht 4 aufgebracht, wobei die Kontaktflächenbereiche 3 beschichtungsfrei bleiben.

Nach dem Aushärten der Passivierungsschicht 4 wird auf diese eine die Oberfläche des Chips 1 maximal ausnutzende leitfähige Polymerschicht 5, vorzugsweise mittels Siebdruck aufgebracht. Wie aus der Fig. 1 zu erkennen, unterteilt sich die leitfähige Polymerschicht 5 in zwei nunmehr lateral vergrößerte äußere Kontakte 6 und 7.
Zwischen diesen äußeren Kontakten 6 und 7 ist ein isolierender Bereich 8 zum Vermeiden eines elektrischen Kurzschlusses zwischen den Kontakten 6 und 7 vorgesehen.

Die leitfähige Polymerschicht weist Silberpartikel auf und besitzt eine Dicke von ca. 20 µm.

Optional kann die Rückseite des Chips 1 eine ca. 50 bis 100 µm dicke Invar-Versteifungsschicht 9 aufweisen.

Es sei an dieser Stelle angemerkt, daß die Fig. 1 einen bereits vereinzelten Chip zeigt, jedoch erfindungsgemäß vorgesehen ist, die erwähnte Schichtenfolge zur technologischen Optimierung im Wafer- bzw. Scheibenverband, d.h. vor dem Vereinzeln der Chips, z.B. durch Sägen entlang vorgesehener Trennlinien, aufzubringen. Gleiches gilt für die optionale Invar-Versteifungsschicht 9.

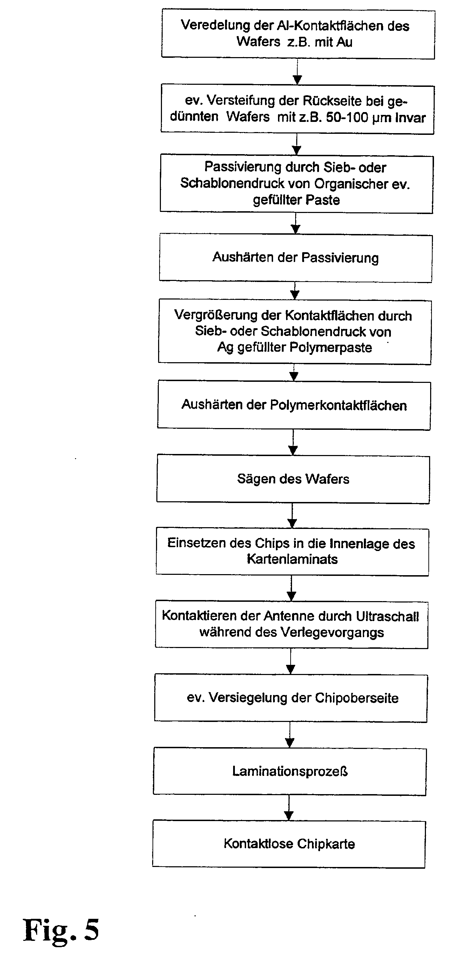

Unter Hinweis auf Fig. 5 wird also zunächst ein Veredeln durch eine Zwischenbeschichtung der üblichen Aluminiumkontaktflächen auf dem Wafer vorgenommen, wobei hier vorzugsweise eine Au-Beschichtung gewählt wird. Um die aus Gründen einer minimalen Dicke abgedünnten Wafer vor Beschädigungen zu schützen, kann die Invar-Versteifungsschicht im Dickenbereich zwischen 50 und 100 µm auf die Waferrückseite aufgebracht werden.

Eine Isolierung unter Freilassung der Kontaktflächen sowie vorgesehener Positioniermarken und sonstiger technologisch wichtiger Kennzeichnungen dient der Potentialtrennung der Wafer- bzw. Chipoberfläche.

Nach einem Aushärten dieser Passivierungsschicht erfolgt die eigentliche Vergrößerung der Kontaktflächen durch einen Sieb- oder Schablonendruck mit Hilfe leitfähiger Polymerpaste, wobei die Leitfähigkeit vorzugsweise durch Ag-Partikel eingestellt wird.

Nach dem Aushärten dieser Polymerkontaktflächen, welche sich hinsichtlich der lateralen Ausdehnung an der Oberfläche des späteren vereinzelten Chips orientieren, erfolgt ein Sägen des Wavers, d.h. das Vereinzeln in Chips.

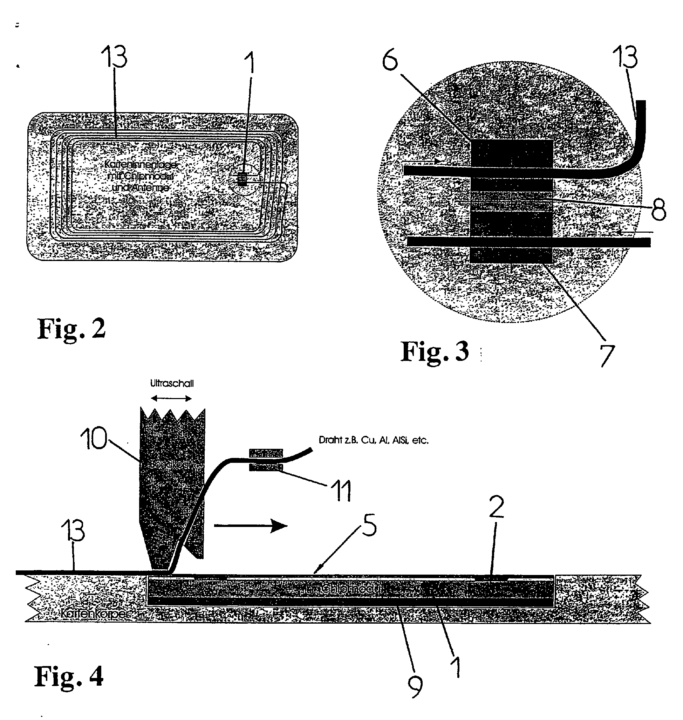

Die so vorbehandelten Chips werden in die Innenlage eines Kartenlaminats oder in die Ausnehmung eines Kartenkörpers eingesetzt. Üblicherweise wird dann ein Verlegen der Antenne mit einer Struktur, wie prinzipiell in der Fig. 2 dargestellt, vorgenommen, wobei die Antennenspulen-Anschlußenden vorzugsweise unter Einwirkung von Ultraschall während des Verlegevorgangs mit den äußeren Kontaktflächen 6 und 7 (siehe Fig. 3) mechanisch und elektrisch durch Einbetten verbunden werden.

Über eine Versiegelung oder Oberflächenbeschichtung der Chipoberseite kann die Kontaktsicherheit und Langzeitstabilität der Gesamtanordnung weiter verbessert werden. Im Anschluß erfolgt ein an sich bekanntes Laminieren unter Erhalt der kontaktlosen Chipkarte mit im Inneren befindlichen Halbleiterchip, welcher über die Antennenspule für den kontaktlosen Informationsaustausch, z.B. mit einem Terminal geeignet ist.

Die Fig. 3 läßt als vergrößerte Darstellung der Chipoberseite erkennen, daß die Antennenspulen-Anschlußenden sich über die laterale Flächenausdehnung der vergrößerten Kontaktflächen 6 und 7 zum Erhalt einer optimierten mechanischen und elektrischen Verbindung erstreckend geführt sind. Der Kontaktübergangsbereich ist durch die Größe der äußeren Kontakte 6 und 7 hoch und es können insbesondere bedingt durch das mindestens teilweise Einbetten der Anschlußenden in die leitfähige Polymerschicht 5 der äußeren Kontakte 6 und 7 Biege- und Torsionskräfte aufgenommen werden. Durch die bezogen auf den Durchmesser der Antennenspule große Breite der äußeren Kontakte 6 und 7 ist der Verlegeaufwand, wie in Fig. 4 prinzipiell gezeigt, einfach und es müssen keine besonderen Anforderungen hinsichtlich der Positioniergenauigkeit des Bondkopfes 10 mit Drahtzuführung 11 gestellt werden.

### Bezugszeichenaufstellung

- 1: Chip
- 2: Kontaktflächen auf dem Chip
- 3: Kontaktflächenbereiche
- 4: Passivierungsschicht
- 5: leitfähige Polymerschicht
- 6; 7: äußere Kontaktflächen
- 8: isolierender Bereich
- 9: Invar-Versteifungsschicht
- 10: Bondkopf
- 11: Drahtzuführung
- 13: Signalübertragungseinrichtung

## Patentansprüche

1. Verfahren zur Herstellung einer kontaktlosen Chipkarte, diese enthaltend einen Transponderchip, wobei der Chip nach Vereinzeln aus dem Waferverband in einen Laminat-, insbesondere Kartenkörper der kontaktlosen Chipkarte eingebracht und mit einer induktiven Signalübertragungseinrichtung in Form einer Antennenspule elektrisch kontaktiert wird,
umfassend folgende Schrittkombination:
- die mindestens zwei Kontaktflächen (2) des Chips (1) werden zum Anschluß der induktiven Signalübertragungseinrichtung (13) im Waferverband mit einer hochleitfähigen metallischen Beschichtung versehen;
- außerhalb der beschichteten Kontaktflächen wird eine großflächige isolierende Passivierungsschicht (4) aufgebracht;
- nach dem Aushärten der Passivierungsschicht (4) wird auf dieser eine leitfähige Polymerschicht (5), vorzugsweise mittels Siebdruck in den Grenzen des zu vereinzelnden Chips, (1) großflächig aufgetragen, wobei die so erhaltene leitfähige Polymerschichtfläche (5) voneinander isolierte Abschnitte aufweist, die jeweils in elektrischer Verbindung zur metallischen Beschichtung der Kontaktflächen (2) auf dem Chip (1) stehen, so daß sich eine laterale Kontaktflächenvergrößerung ergibt,
- nach an sich bekanntem Vereinzeln des so vorbehandelten Chips (1) wird dieser in einer Ausnehmung des Laminat- oder Kartenkörpers eingebracht und Anschlußenden der induktiven Signalübertragungseinrichtung (13) werden mit den Polymerschicht-Kontaktflächen durch mindestens teilweises Einbetten in diesen verbunden.

2. Verfahren nach Anspruch 1,
**dadurch gekennzeichnet, daß**
auf den abgedünnten Wafer eine rückseitige Versteifung (9) aufgebracht wird.

3. Verfahren nach Anspruch 1 oder 2,
**dadurch gekennzeichnet, daß**
beim Aufbringen der Passivierungsschicht (4) sowie der leitfähigen Polymerbeschichtung (5) neben den Chipkontaktflächen bzw. den umgebenden Kontaktflächenbereichen (3) Positioniermarken und sonstige technologische Kennzeichnungsbereiche beschichtungsfrei bleiben.

4. Verfahren nach einem der vorangegangenen Ansprüche,
**dadurch gekennzeichnet, daß**
die Anschlußenden einer Antennenspule sich über die laterale Flächenausdehnung der vergrößerten Kontaktflächen (6; 7) zum Erhalt einer optimierten mechanischen und elektrischen Verbindung erstreckend geführt und vorzugsweise mittels Thermosonic während des Verlegevorgangs mit der jeweiligen Kontaktfläche verbunden werden.

5. Verfahren nach einem der vorangegangenen Ansprüche,
**dadurch gekennzeichnet, daß**
nach Kontaktierung der induktiven Signalübertragungseinrichtung (13) bzw. Antennenspule eine Oberflächenschutzschicht aufgebracht wird.

6. Verfahren nach Anspruch 5,
**dadurch gekennzeichnet, daß**
die Oberflächenschutzschicht eine auf den Kartenkörper aufzubringende Laminatschicht ist.

7. Verfahren nach Anspruch 5,
**dadurch gekennzeichnet, daß**
als Oberflächenschutzschicht ein UV-härtender Epoxidharz aufgebracht wird.

## Claims

1. A method for manufacturing a contactless chip card which comprises a transponder chip, with the chip after being separated from the wafer system being introduced into a laminated, in particular a card body of the contactless chip card and electrically contacted with an inductive signal transmission device,
comprising the following combination of steps:
- the at least two contact areas (2) of the chip (1) are provided with a highly conductive metallic coating for the connection of the inductive signal transmission device (13) in the wafer system;
- a large-area insulating passivation layer (4) is applied outside of the coated contact areas;
- after curing of the passivation layer (4), a conductive polymer layer (5) is applied in a large-area manner to same, preferably by means of screen printing, within the boundaries of the chip (1) to be separated, with the conductive polymer layer area (5) so obtained comprising portions which are insulated against each other, each of which being electrically connected with the metallic coating of the contact areas (2) on the chip (1), so that a lateral contact area increase is obtained;
- after the separation known per se of the chip (1) which has been pre-treated in said manner it is introduced into a recess of the laminated or card body, and terminal ends of the inductive signal transmission device (13) are connected with the polymer layer contact areas by at least partially embedding them into same.

2. The method according to Claim 1,
**characterised in that**
a rear side stiffener (9) is applied to the thinned wafer.

3. The method according to Claim 1 or 2,
**characterised in that**
positioning marks and other technological marking regions remain uncoated upon the application of the passivation layer (4) and the conductive polymer coating (5) adjacent to the chip contact areas or the surrounding contact area regions (3), respectively.

4. The method according to one of the previous claims,
**characterised in that**
the terminal ends of an antenna coil are routed extending across the lateral area extension of the increased contact areas (6; 7) for obtaining an optimised mechanical and electrical connection and are preferably connected thermosonically with the respective contact area during the routing operation.

5. The chip method according to one of the previous claims,
**characterised in that**
a surface protection layer is applied after contacting the inductive signal transmission device (13) or the antenna coil, respectively.

6. The method according to Claim 5,
**characterised in that**
the surface protection layer is a laminate layer to be applied to the card body.

7. The method according to Claim 5,
**characterised in that**
a UV curing epoxy resin is applied as the surface protection layer.

## Revendications

1. Procédé pour la fabrication d'une carte à puce sans contact, ladite carte contenant une puce transpondeur, ladite puce étant, après individualisation à partir du groupement en plaquette, intégrée dans un corps stratifié, en particulier un corps de la carte à puce sans contact, et mise en contact électrique avec un dispositif inductif de transmission de signaux sous la forme d'un bobinage d'antenne,
le procédé comprenant la combinaison des étapes suivantes :
- les au moins deux surfaces de contact (2) de la puce (1) sont dotées d'un revêtement métallique à haute conductivité, dans le but de raccorder le dispositif inductif de transmission de signaux (13) dans le groupement en plaquette ;
- à l'extérieur des surfaces de contact revêtues est appliquée une couche de passivation (4) isolante à grande surface ;
- après durcissement de la couche de passivation (4), on applique sur celle-ci une couche polymère conductrice (5), de préférence par sérigraphie, dans les limites de la puce à individualiser (1) sur une grande surface, et la surface de couche polymère (5) conductrice ainsi obtenue présente des tronçons isolés les uns des autres, qui sont respectivement en liaison électrique avec le revêtement métallique des surfaces de contact (2) sur la puce (1), de sorte qu'il en résulte un agrandissement latéral des surfaces de contact, et
- après l'individualisation, connue en elle-même, de la puce (1) ainsi prétraitée, celle-ci est intégrée dans un évidement du corps en stratifié ou du corps de carte, et des extrémités de raccordement du dispositif inductif de transmission de signaux (13) sont reliées aux surfaces de contact de la couche en polymère en étant au moins partiellement noyées dans lesdites surfaces.

2. Procédé selon la revendication 1,
**caractérisé en ce que** l'on applique une rigidification postérieure (9) sur la plaquette amincie.

3. Procédé selon la revendication 1 ou 2,
**caractérisé en ce que** lors de l'application de la couche de passivation (4) ainsi que du revêtement en polymère conducteur (5), des marques de positionnement, ou d'autres zones de caractérisation technologique, restent dépourvues de revêtement, à côté des surfaces de contact à puce ou des zones de surface de contact (3) qui les entourent.

4. Procédé selon l'une des revendications précédentes, **caractérisé en ce que** les extrémités de raccordement d'un bobinage d'antenne sont guidées de manière à s'étendre sur l'extension de surfaces latérales des surfaces de contact (6 ; 7) agrandies pour obtenir une liaison mécanique et électrique optimisée, et sont de préférence reliées par des techniques thermo-soniques pendant l'opération de pose avec la surface de contact respective.

5. Procédé selon l'une des revendications précédentes, **caractérisé en ce que** qu'après mise en contact du moyen de transmission de signaux inductifs (13) ou du bobinage d'antenne, on applique une couche de protection de surface.

6. Procédé selon la revendication 5,
**caractérisé en ce que** la couche de protection de surface est une couche stratifiée qui doit être appliquée sur le corps de carte.

7. Procédé selon la revendication 5, **caractérisé en ce que** l'on applique une résine époxy durcissable aux rayons ultraviolets à titre de couche de protection de surface.
